# EUROPEAN PATENT SPECIFICATION

(11) **EP 0 790 417 B1**
(45) Date of publication and mention of the grant of the patent: **15.03.2000**
(21) Application number: 97200335.4
(22) Date of filing: 07.02.1997
(51) Int. Cl.: F16B 37/12, F16B 39/26

(54) **Self-locking nut**
Selbstklemmende Mutter
Ecrou autobloquant

(30) Priority: 13.02.1996 IT MI960266
(43) Date of publication of application: 20.08.1997
(73) Proprietor: Urama S.r.l., 20048 Carate Brianza (Milano) (IT)
(72) Inventor: Minola, Antonio, 20040 Bellusco (Milano) (IT)
(74) Representative: Martegani, Franco

(56) References cited:
- EP-A- 0 271 305
- EP-A- 0 411 737
- EP-A- 0 443 670
- GB-A- 2 002 865

## Description

This invention relates to an improved self-braking and self-locking nut, particularly but not exclusively suitable for applications in which the tightening torque is relatively low. Self-braking and self-locking nuts are well known to the expert of the art, consisting of a plurality of elastically yieldable threaded conical washers contained within a housing.

Nuts of this type are described for example in Italian patents 1115369 corresponding to GB-A-2 002 865 and 1152744, in Italian patent 1254946 filed on 29 April 1992 in the name of Minola Antonio, and in EP-A-443670.

The subject of these patents, to which reference should be made if further clarification is required, is to be considered an integral part of this description for the purposes of understanding the invention.

In these nuts, the number of elastically yieldable threaded conical washers, which are stacked as a pack, is generally determined by the tightening torque.

The greater the tightening torque, the greater the number of washers and vice versa.

Consequently, for evident production cost reasons, when the tightening torque is relatively low, it is highly desirable to construct a nut with the minimum number of washers, for example two, or three.

This results in a nut of very small thickness, and hence difficult to manoeuvre with the tightening wrenches usually used, and which can only exert an insecure grip on the nut. EP-A-443 670 shows a nut of this kind.

A first object of the present invention is to obviate said drawback of the known art by providing a self-braking and self-locking nut of the aforesaid type which, although of small thickness, and hence low production cost, can be safely manoeuvred by a usual operating wrench.

Said nuts must also be mounted in the correct manner, ie with the concavity of the elastically yieldable threaded conical washers facing the bearing surface.

It can happen however that the operator mounts the nut in the opposite direction, with obvious maloperation deriving therefrom.

A further object of the present invention is therefore to provide a self-braking and self-locking nut which comprises reference means able to automatically determine its correct mounting direction.

Said objects are attained by a nut having the characteristics defined in the accompanying claims.

The structural and operational characteristics of the invention and its advantages over the known art will be more apparent from an examination of the following description given with reference to the accompanying drawings, which show one embodiment of the invention. In the drawings:
Figure 1 is a front elevation showing just the housing of the nut according to the invention in the open position;
Figure 2 is a plan view of the housing of Figure 1 taken from above;
Figure 3 is a front elevation showing the housing of Figure 1 closed onto two elastically yieldable threaded conical washers stacked as a pack, to define a self-braking and self-locking nut of the invention;
Figure 4 is a plan view of the nut of Figure 3 from above;
Figure 5 is a section on the line V-V of Figure 4; and
Figure 6 is a plan view of the nut of Figure 5 from below.

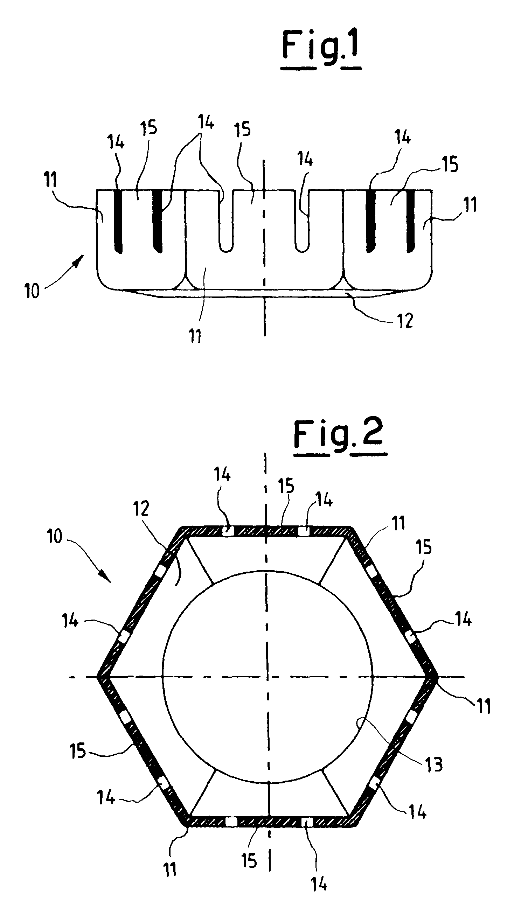

With initial reference to Figures 1 and 2 of the drawings, the self-braking and self-locking nut of the present invention is produced starting from a substantially prismatic housing of equal-sided substantially polygonal plan, for example hexagonal, indicated overall by 10.

The housing 10 is open upperly, it comprises six identical walls 11, and is partially closed at its base by a slightly convex peripheral wall 12, provided centrally with a circular aperture 13.

According to the invention, each wall 11 of the housing 10 is provided with a pair of interspaced slots 14 defining a clamping tooth 15.

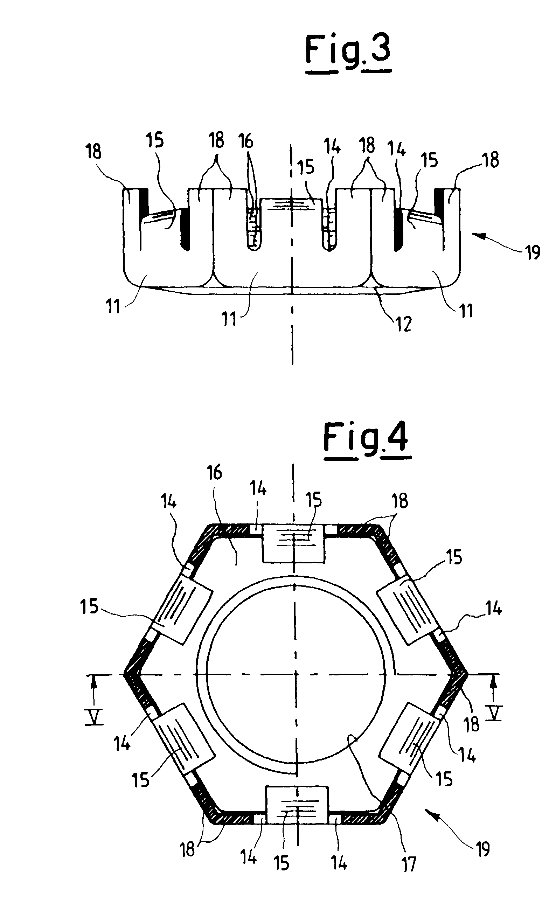

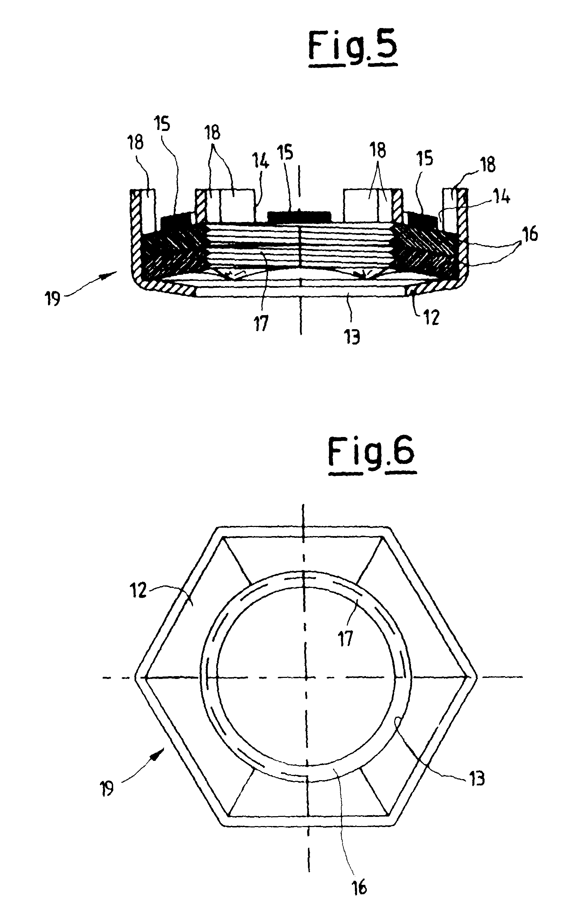

With reference to Figures 3-6, into the housing of Figures 1, 2 there is inserted a plurality of conical washers 16 (for example two), threaded at 17 and stacked as a pack, they being fixed in position by bending the teeth 15 onto the upper washer, while the lower washer rests on the base wall 12.

As can be clearly seen from Figures 3-5 of the drawings, bending the teeth 15 not only fixes the washers 16 in place, but also defines a plurality of vertically extending corners 18, which project above the useful minimum thickness of the nut, to define-notwithstanding the minimum thickness of the nut - a gripping surface for the operating wrench which is large, and in any event sufficient to prevent any slippage.

Moreover, the presence of the corners 18 automatically identifies the mounting direction of the nut 19 of the invention, so preventing reverse mounting.

The corners 18 are also useful in the case of automatic feed of the nut 19, to orientate it in the correct direction for mounting.

In the light of the aforegoing, the objects stated in the introduction to the description are attained.

## Claims

1. A self-braking and self-locking nut assembly of the type comprising a plurality of elastically yieldable conical threaded washers (16) stacked as a pack within a containing housing (10), characterised in that said housing (10) comprises corners (18) defining wrench gripping surfaces extending axially beyond the axial thickness of the stacked washers and the base of the housing.

2. A nut assembly as claimed in claim 1, characterised in that the number of said corners (18) is equal to the number of sides of the nut (19).

3. A nut assembly as claimed in claim 1, characterised in that said corners (18) extend axially beyond the thickness of the nut (19) for a height equal to about the thickness of the nut (19) itself.

## Patentansprüche

1. Selbstbremsende und selbstarretierende Mutteranordnung von der Art, welche eine Mehrzahl von elastisch nachgiebigen konischen, mit Gewinde versehenen Scheiben (16) umfaßt, die als eine Packung innerhalb eines aufnehmenden Gehäuses (10) gestapelt sind, dadurch **gekennzeichnet,** daß das Gehäuse (10) Ecken (18) umfaßt, die Schraubenschlüsselgreifflächen definieren bzw. begrenzen, welche sich axial über die axiale Dicke der gestapelten Scheiben und die Basis des Gehäuses hinaus erstrecken.

2. Mutteranordnung nach Anspruch 1, dadurch **gekennzeichnet ,** daß die Anzahl der Ecken (18) gleich der Anzahl der Seiten der Mutter (19) ist.

3. Mutteranordnung nach Anspruch 1, dadurch **gekennzeichnet ,** daß sich die Ecken (18) um eine Höhe axial über die Dicke der Mutter (19) hinaus erstrecken, die etwa gleich der Dicke der Mutter (19) selbst ist.

## Revendications

1. Ensemble formant écrou auto-cassant et auto-bloquant du type comprenant une pluralité de rondelles filetées (16) coniques élastiquement déformables empilées pour former une pile à l'intérieur d'un boîtier (10) les contenant, caractérisé en ce que le boîtier (10) présente des coins (18) définissant des surfaces d'application pour clé s'étendant axialement au-delà de l'épaisseur axiale des rondelles empilées et de la base du boîtier.

2. Ensemble formant écrou selon la revendication 1, caractérisé en ce que le nombre de coins (18) est égal au nombre de côtés de l'écrou (19).

3. Ensemble formant écrou selon la revendication 1, caractérisé en ce que les coins (18) s'étendent axialement au-delà de l'épaisseur de l'écrou (19) sur une hauteur égale à approximativement l'épaisseur de l'écrou (19) proprement dit.
